## Europäisches Patentamt

## European Patent Office

## Office européen des brevets

(19)

(11) Veröffentlichungsnummer: **0 211 058**
**B1**

(12) **EUROPÄISCHE PATENTSCHRIFT**

(45) Veröffentlichungstag der Patentschrift:
21.09.88

(21) Anmeldenummer: **86901067.8**

(22) Anmeldetag: **31.01.86**

(86) Internationale Anmeldenummer:
**PCT/EP 86/00047**

(87) Internationale Veröffentlichungsnummer:
**WO 86/04629 (14.08.86 Gazette 86/18)**

(51) Int. Cl.⁴: **E 03 F 5/10**

(54) **FLÜSSIGKEITSSPEICHERRAUM MIT SPÜLEINRICHTUNG.**

(30) Priorität: **02.02.85 DE 3503509**
**18.07.85 DE 3525667**

(43) Veröffentlichungstag der Anmeldung:
**25.02.87 Patentblatt 87/9**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**CH-A-590 980**
**DE-A-3 205 983**
**DE-U-8 502 827**
**US-A-1 744 266**
**US-A-3 962 084**

(73) Patentinhaber: **Giehl, Klaus Ulrich, Dipl.- Ing. (FH),
Lindenstrasse 26, D-5239 Heimborn (DE)**
Patentinhaber: **Steinhardt, Lothar, Dipl.- Ing.,
Panoramastrasse 44, D-6204 Taunusstein 2 (DE)**

(72) Erfinder: **Giehl, Klaus Ulrich, Dipl.- Ing. (FH),
Lindenstrasse 26, D-5239 Heimborn (DE)**
Erfinder: **Steinhardt, Lothar, Dipl.- Ing.,
Panoramastrasse 44, D-6204 Taunusstein 2 (DE)**

(74) Vertreter: **Quermann, Helmut, Dipl.- Ing., Postfach
6145 Gustav- Freytag- Strasse 25, D-6200
Wiesbaden (DE)**

EP 0 211 058 B1

## Beschreibung

Die Erfindung betrifft einen Flüssigkeitsspeicherraum, insbesondere Regenbecken- oder Kanalstauräume, mit mindestens einer im Bereich eines Sohlhochpunktes des Speicherraumes angeordneten, mit Speicherflüssigkeit füllbaren Spülkammer, die bei leergelaufenem Speicherraum über mindestens eine Spülöffnung die Speicherflüssigkeit als Spülschwall auslaufen läßt.

Flüssigkeitsspeicherräume werden überall dort eingesetzt, wo stoßweise anfallende Flüssigkeitsmengen zunächst aufgefangen und verzögert weitergegeben werden, um nachfolgende Einrichtungen nicht zu überlasten.

Derartige Flüssigkeitsspeicherräume werden häufig als Regenrückhaltebecken, Regenklärbecken, Regenüberlaufbecken und Staukanäle bei der Abwasserbeseitigung verwendet.

Bei starken und lang andauernden Regenfällen fallen stoßartig Regen- oder Mischwassermengen an, die die Kapazitäten des Kanalnetzes und der Kläranlagen um ein vielfaches übersteigen. Solche Regenwasserstöße werden durch vorübergehende Speicherung in z. B. Regenbecken oder Kanalstauräumen aufgefangen und zeitlich verzögert weitergegeben.

Die in Speicherräumen ankommenden Wassermengen führen gerade zu Beginn eines Regenereignisses eine erhebliche Schmutzfracht mit sich, da die im Kanalisationssystem abgelagerten Schmutzstoffe durch den ersten Regenwasserstoß mitgerissen werden.

Während der Speicherung lagert sich die Schmutzfracht zum größten Teil am Boden ab und bildet dort einen Bodenschlamm. Im Zuge der Entleerung der Speicherräume muß dieser Bodenschlamm über den Ablauf entfernt werden. Da die Ausfließströmung im Speicherraum jedoch zu gering ist und die damit verbundene Schleppkraft des Wassers für den Transport der Ablagerungen nicht ausreicht, bleibt nach der Entleerung der überwiegende Teil des Bodenschlamms zurück. In solchen Fällen wurden zum Zwecke der Reinigung der Sohle z. B. Regenbecken mit Räumern oder Sprühanlagen ausgerüstet, deren Installation und Betrieb jedoch mit erheblichem Aufwand und mit dem Einsatz von Fremdenergie verbunden ist.

Aus der CH-A-590 980 ist bekannt, eine Spülkippe zu verwenden, die im Zulaufbereich oberhalb der Sohle angeordnet ist und sich in Querrichtung des Beckens erstreckt. Die Spülkippe wird von oben mit Wasser gefüllt und ist um ihre Achse um 90° schwenkbar, wobei der Schwerpunkt der leeren oder teilweise gefüllten Kippe nicht mit dem Schwerpunkt der vollen Kippe übereinstimmt. Durch eine entsprechende Anordnung der Achse zwischen diesen beiden Schwerpunkten wird erreicht, daß erst am Ende des Einfüllvorganges ein Übergewicht entsteht, wodurch die Kippe geschwenkt wird. Dies bewirkt, daß sich ein Wasserschwall gegen die Beckenwand ergießt. Das Wasser strömt die Wand entlang nach unten, über einen abgerundeten Übergang zwischen Beckenwand und Sohle und dann mit großer Geschwindigkeit entlang der Sohle, um so den abgelagerten Schmutz zu entfernen und zum Auslauf des Beckens zu befördern. Die entleerte Spülkippe schwenkt dann automatisch in ihre horizontale Lage zurück, und der Vorgang kann wiederholt werden. Diese bekannte Spülkippe hat mehrere Nachteile:

a. Es ist eine komplizierte Wasserstandsmeßeinrichtung erforderlich, die den Einfüllvorgang nach vollständig entleertem Becken auslöst;

Hierzu ist eine umfangreiche Maschinen- und Steuerungstechnik mit den entsprechenden elektrischen Anschlüssen notwendig.

b. Das Fassungsvermögen der Spülkippe ist maschinentechnisch begrenzt, so daß zwei bis drei Spülvorgänge pro Spülung durchgeführt werden müssen.

c. Zum Füllen der Spülkippe sind entsprechende Versorgungsleitungen notwendig, die die Gesamtkosten des Beckens erhöhen.

d. Die Spülkippe wird entweder mit Trinkwasser gefüllt, wodurch sehr hohe Betriebskosten anfallen, oder mit Mischwasser oder Grundwasser. Dann sind allerdings zusätzlich Pumpen mit der dazugehörigen elektrischen Steuerungstechnik erforderlich, um das Wasser aus den Becken zur Spülkippe hochzupumpen.

Des weiteren sind Speicherbecken mit aufgelöster Sohle in Form von Höcker-Rinnen bekannt, die mit Spülkammern am Sohlhochpunkt der Becken angeordnet werden, die bei Bedarf mit Rein- oder Abwasser gefüllt werden. Durch Öffnen von Schiebern wird dann ein Spülen der Rinnen und somit der Beckensohle bewirkt. Hierbei ergeben sich folgende Nachteile:

a. das Füllen der Spülkammern erfolgt analog zum Füllen der vorgenannten Spülkippen,

b. das Öffnen der Schieber muß elektrisch erfolgen, da eine manuelle Bedienung nicht schnell genug erfolgen kann,

c. ein schlagartiges Öffnen kann bei Schieberverschlüssen nicht erfolgen, so daß ein Spülschwall mit optimaler Spülwirkung nicht erzeugt werden kann,

c. da von einem Schieber aus nur wenige Rinnen gleichzeitig gespült werden können, sind eine größere Anzahl von Spülkammern, Schiebern, Motoren, Steuereinrichtungen etc. erforderlich, die die Ausrüstung erheblich verteuern,

e. werden die vorgenannten Spülkammern manuell betrieben, so wird erfahrungsgemäß nicht unmittelbar nach jedem Regenereignis gespült, so daß sich der Bodenschlamm verfestigt und nur schwer wieder zu beseitigen ist.

Ziel der Erfindung ist daher ein Flüssigkeitsspeicherraum mit einer Spüleinrichtung, die die o.g. Nachteile vermeidet und nach jedem Speichervorgang den Spülvorgang selbsttätig ohne Fremdenergie vornimmt.

Das Ziel wird mit einem Flüssigkeitsspeicherraum erreicht, bei dem sich die Spülkammer mit steigendem Speicherflüssigkeitsniveau von selbst mit Speicherflüssigkeit füllt, Mittel vorgesehen sind, die die zugelaufene Speicherflüssigkeit in der Spülkammer zurückhalten und die Spülöffnung durch einen vom Speicherflüssigkeitsniveau des Speicherraumes gesteuerten Verschluß verschlossen und freigegeben wird.

Der Vorteil des erfindungsgemäßen Flüssigkeitsspeicherraumes besteht darin, daß ohne Fremdenergie selbsttätig zu Beginn des Einstauvorganges die Spülkammer gefüllt und nach dem Leerlaufen des Speicherraumes mit einem kräftigen Spülschwall gespült wird. Alle Spülvorgänge werden mit gesammelter Speicherflüssigkeit durchgeführt, so daß keine Betriebskosten anfallen.

Damit auch bei kleineren Regenereignissen, die zu keiner vollständigen Füllung des Speicherraumes führen, jedoch in jedem Fall die Spülkammer gefüllt wird, um eine vollständige Spülung zu gewährleisten, wird gemäß einer Ausführungsform eine Drosselöffnung in einer Trennwand angeordnet, die vom Speicherraum eine Vorkammer abteilt. Bei einem Regenereignis wird das ankommende Wasser infolge der Drossel in der Vorkammer aufgestaut. Der Aufstau bewirkt eine frühzeitige Füllung der Spülkammer, ohne daß die Hauptkammer ganz gefüllt sein muß. Durch die Drossel wird außerdem die Trockenwetterrinne gespült, wobei alte Ablagerungen weggeschwemmt werden. Eine Drossel ist jedoch grundsätzlich nicht erforderlich, es sind gleichfalls Spülungen ohne Drossel, zum Beispiel in Kanalstauräumen mit kleinem, schmalem Einlaufbauwerk und niedrigem Notüberlauf denkbar.

Die Zulauföffnung für die Spülkammer kann mit der Vorkammer oder mit der Hauptkammer bzw. mit der Vorkammer und dem Speicherraum in Verbindung stehen und wird von einer Rückschlagklappe verschlossen. Es können auch mehrere Zulauföffnungen vorhanden sein, so daß das Wasser oder die Flüssigkeit sowohl von der Vorkammer als auch von der Hauptkammer aus in die Spülkammer einströmen kann.

Der Auslauf aus der Spülkammer wird durch eine verschließbare Spülöffnung gebildet; diese kann z. B. durch eine Verschlußklappe verschließbar sein, welche um eine oberhalb dieser Spülöffnung angeordnete Achse drehbar gelagert ist.

Die Verschlußklappe kann z. B. durch einen Mechanismus verschließbar sein, der aus einer in der Hauptkammer unterhalb der Spülöffnung drehbar angeordneten Welle besteht, welche einerseits durch einen Schwimmer vom Flüssigkeitsniveau im Ablaufbereich her bewegt wird und an der andererseits Nocken bzw. Haken starr derart befestigt sind, daß bei aufschwimmendem Schwimmer diese Nocken bzw. Haken die Verschlußklappe dichtend gegen die Spülöffnung drücken, während bei absinkendem Schwimmer diese Nocken die Verschlußklappe plötzlich freigeben.

Sobald die Flüssigkeit im Speicherraum aufstaut, schwimmt der Schwimmer auf und verschließt zum Beispiel mittels Nocken die Spülöffnung der Spülkammer. Gleichzeitig staut Flüssigkeit in der Vorkammer auf und strömt beispielsweise durch die Zulauföffnung in die Spülkammer. Die Zulauföffnung ist definiert höher angeordnet als die Drossel(n) damit grobe Verschmutzungen, die aufgrund ihrer Schwere im Sohlbereich transportiert werden, durch die Drossel abfließen und nicht in die Spülkammer gelangen.

Wenn nun der Flüssigkeitspegel wieder sinkt, wird die Flüssigkeit durch ein Verschlußmittel, insbesondere in Art einer Rückschlagklappe an der Zulauföffnung zurückgehalten und die Spülkammer bleibt gefüllt. Ist der Speicherraum leergelaufen, dann ist der Schwimmer soweit abgesunken, daß z. B. die Nocken die Verschlußklappe an der Spülöffnung plötzlich freigeben. Diese wird durch die der Spülkammer angesammelte Flüssigkeit aufgedrückt, und ein Spülschwall ergießt sich in den Speicherraum.

Da die Spülöffnung der Spülkammer nur wenig über der Beckensohle angeordnet ist, tritt beim Auslaufen des Sammelwassers kein Energieverlust auf, wie z. B. bei der Spülkippe durch das Umleiten des Spülschwalles. Da außerdem das Speichervolumen erfindungsgemäß maschinentechnisch unbegrenzt ist, wird hier mit größeren Spülmengen aus kleineren Stauhöhen/Fallhöhen gearbeitet.

Das schlagartige Öffnen der Spülöffnung der Spülkammer wird dadurch erleichtert, daß die Verschlußklappe als Schwimmkörper ausgebildet sein und somit aufschwimmen kann.

Die Wand zwischen der Vorkammer und der Spülkammer und/ oder die Wand zwischen der Spülkammer und dem Speicherraum können als Überlaufschwelle ausgebildet sein. Bei Anordnung einer Drosselöffnung kann die maximale Zulaufmenge ohnehin nicht vollständig durch die Drosselöffnung in den Speicherraum fließen, so daß die Mehrmenge über die Überlaufschwelle in den Speicherraum gelangt.

Da wegen der Drossel zunächst die Flüssigkeit in der Vorkammer gestaut wird, läuft die Flüssigkeit zuerst über die Wand der Spülkammer. Um aufschwimmende Schmutzstoffe zurückzuhalten, kann diese Wand über den maximalen Flüssigkeitsspiegel hochgezogen und mit zur Spülkammer hin aufsteigenden Schrägschlitzen mit Tauchwandeffekt versehen sein, oder es kann vor dieser Wand eine Tauchwand angeordnet sein, die sich in diese Vorkammer erstreckt.

Gemäß einer besonderen Ausführungsform ist die Grundfläche des Flüssigkeitsspeicherraumes rechteckig. Mehrere Spülkammern können nebeneinander angeordnet sein, vorzugsweise rechts und links im Bereich der Sohlhochpunkte bzw. des Zulaufes. Die Spülöffnungen dieser Spülkammern sind durch einen Mechanismus verschließbar, der durch einen einzelnen Schwimmer betätigbar sein kann. Um den Auslaufbereich des Flüssigkeitsspeicherraumes bei der Spülung nicht zu überlasten, wird gemäß einer anderen Ausführungsform jeder Spülöffnung ein eigener Schließmechanismus zugeordnet, der durch je einen Schwimmer betätigt werden kann, wobei die Schwimmer derart angeordnet sein können, daß sich die Spülkammern nacheinander entleeren. Es können auch Spülkammern neben- und/oder übereinander und/oder nacheinander angeordnet und mehrere über einen Schwimmer gesteuert werden.

Vorteilhaft weist der Speicherraum eine in Auslaufrichtung der Speicherflüssigkeit verlaufende Ablaufrinne auf, wobei zur Führung des Spülschwalles parallel zu dieser an deren Rand Leitprofile angeordnet sind. Vorzugsweise erstrecken sich diese Leitprofile nicht bis über das maximale Flüssigkeitsniveau hinaus. Bei Speicherräumen mit Sohlenquergefälle sind dabei zweckmäßig zusätzliche Leitprofile in Beckenlängsrichtung zur Führung des Spulschwalls angeordnet, die vorteilhaft in Beckenlängsrichtung zur Ablaufrinne hin geringfügig konvergieren, womit auch der Auslaufbereich sicher gespült werden kann.

Gemäß einer weiteren Ausführungsform ist die Grundfläche des Flüssigkeitsspeicherraumes kreisförmig oder polygonal. Bei einer derartigen Flüssigkeitsspeicherraum bilden die Hauptkammern einen außenliegenden Kreisringabschnitt, der durch einen ersten geraden Trennwandabschnitt, einen kreisförmigen Trennwandabschnitt bzw. eine Leitwand und durch einen zweiten geraden Trennwandabschnitt von der Vorkammer getrennt ist. Bei dieser Ausführungsform befindet sich der Schwimmer wie beim rechteckigen Becken im Ablaufbereich des Speicherraumes.

Wie bereits erwähnt wurde, wird erfindungsgemäß dadurch eine optimale Spülwirkung erzielt, daß die Spülkammer (n) im Bereich der Sohlhochpunkte des Speicherraumes angeordnet ist/sind. Unter Sohlhochpunkt ist dabei der höchste Punkt der Sohle des Speicherraumes, z. B. die Becken-sohle, zu verstehen. Soll bei Becken mit einer Ablaufrinne eine separate Spülung dieser Ablaufrinne - im allgemeinen nach der Spülung des gesamten Beckens - durchgeführt werden, so ist gemäß einer Ausführungsform mindestens eine Spülkammer vorgesehen, die in die Ablaufrinne entleert.

Damit der Spülschwall mit den Schmutzstoffen in die Ablaufrinne geleitet wird, können im Ablaufbereich des Flüssigkeitsspeicherraumes eine oder mehrere Rundungen vorgesehen sein, die zudem gegenüber und versetzt angeordnet sein können.

Es wurde bereits ausgeführt, daß der Schwimmer vorzugsweise im Ablaufbereich des Speicherraumes angeordnet ist. Die Übertragung der Schwimmerbewegung auf den Schließmechanismus für die Spülöffnung erfolgt entsprechend dem Flüssigkeitsstand im Ablaufbereich, beispielsweise über Drahtseile, Bowdenzüge, hydraulisch oder auf andere geeignete Weise. Es ist gleichfalls denkbar, den Schwimmer unmittelbar am Schließmechanismus hinter der Spülöffnung anzuordnen. In diesem Fall kann der Schwimmer über einen Hebel unmittelbar auf den Nocken bzw. Haken zum Betätigen der Verschlußklappe wirken. Bei einer besonderen Ausführungsform der Erfindung ist vorgesehen jeden Schwimmer mit seinem Schwimmerarm und mit einem zugeordneten Hydraulikzylinder an der Beckenwand zu befestigen. Je nach Flüssigkeitsniveau wird durch den Schwimmer mit Schwimmerarm Schub oder Zug auf den Kolben des Hydraulikzylinders ausgeübt. Die entsprechende Kolbenbewegung wird über mindestens eine in sich geschlossene Hydraulikleitung auf den Kolben eines an der Verschließkappe befindlichen zweiten Hydraulikzylinders übertragen, der zum Beispiel die Welle mit dem Nocken bewegt oder zum Beispiel eine unterhalb der Verschlußkappe angeordnete Schub- und Zugstange in eine Lochführung der Verschlußklappe hinein- oder herausfährt, wodurch die Verschlußklappe je nach Flüssigkeitsniveau im Ablaufbereich verschlossen oder geöffnet wird.

Beispielhafte Ausführungsformen werden nachfolgend unter Hinweis auf die Zeichnungen näher erläutert.

Es zeigen:

Fig. 1 eine Draufsicht auf einen erfindungsgemäßen rechteckigen Flüssigkeitsspeicher, mit im Bereich der Spülöffnungen angeordneten Schwimmern,

Fig. 2a einen Schnitt durch den Flüssigkeitsspeicherraum der Fig. 1, längs der Linie A-A,

Fig. 2b eine gegenüber der Ausführungsform gem. der Darstellung in Fig. 2a abgewandelte Ausführungsform,

Fig. 3 einen Schnitt längs der Linie B-B in Fig. 1, wobei jedoch die Spülkammern nur durch eine Wand voneinander getrennt sind,

Fig. 4 einen Schnitt längs der Linie C-C der Fig. 1,

Fig. 5 einen Schnitt, parallel der Linie A-A in Fig. 1, zur Erläuterung der Verschließorgane der Spülkammer,

Fig. 6a, 6b zwei Ansichten der Verschlußklappen, die von einem bzw. zwei Schwimmern betätigt werden,

Fig. 7 eine Draufsicht auf einen erfindungsgemäßen mehreckigen Flüssigkeitsspeicherraum mit im Ablaufbereich angeordneten Schwimmern,

Fig. 8 einen Schnitt durch den Flüssigkeitsspeicherraum der Fig. 7, längs der Linie A-A,

Fig. 9 einen Schnitt durch den Flüssigkeitsspeicherraum der Fig. 7, längs der Linie B-B,

Fig. 10 einen Schnitt durch den Flüssigkeitsspeicherraum der Fig. 7, längs der Linie D-D,

Fig. 11 eine Draufsicht auf einen erfindungsgemäßen Flüssigkeitsspeicherraum mit kreisförmiger Grundfläche,

Fig. 12, 13 und 14 Draufsichten auf rechteckige Becken mit unterschiedlichen Anordnungen der Spülkammern, wobei in Fig. 13 zusätzlich eine weitere Spülkammer für die Ablaufrinne eingezeichnet ist,

Fig. 15 eine Draufsicht auf ein rundes Becken mit besonderer Spülkammeranordnung.

Um in der nachfolgenden Beschreibung der Figuren unnötige Wiederholungen zu vermeiden, wurden in den Figuren übereinstimmende Merkmale mit gleichen Bezugsziffern bezeichnet.

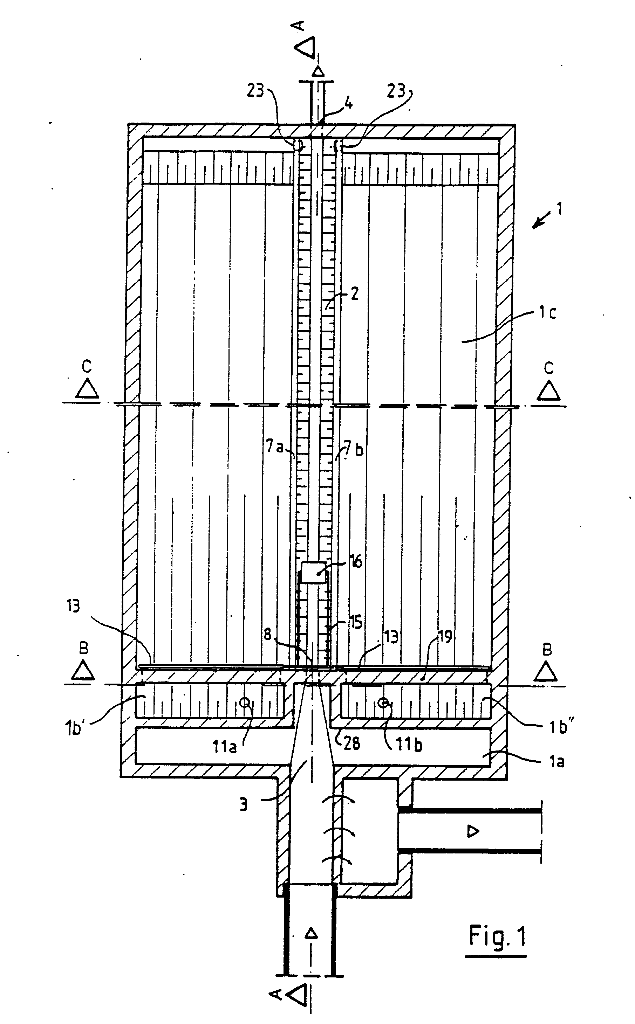

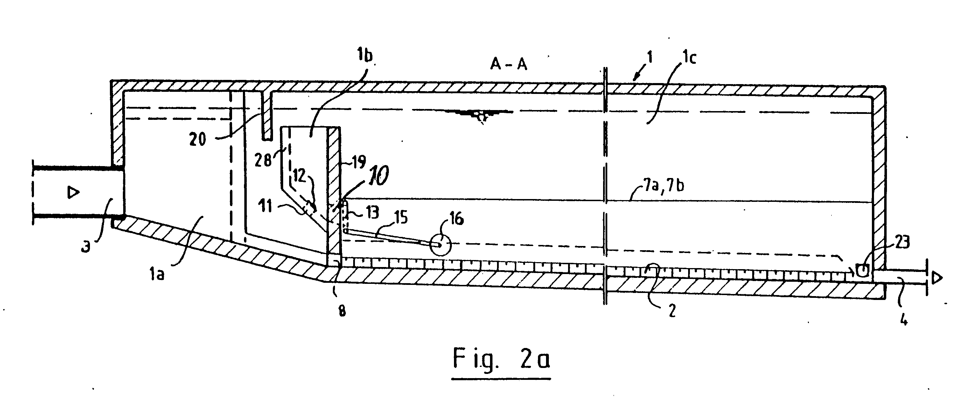

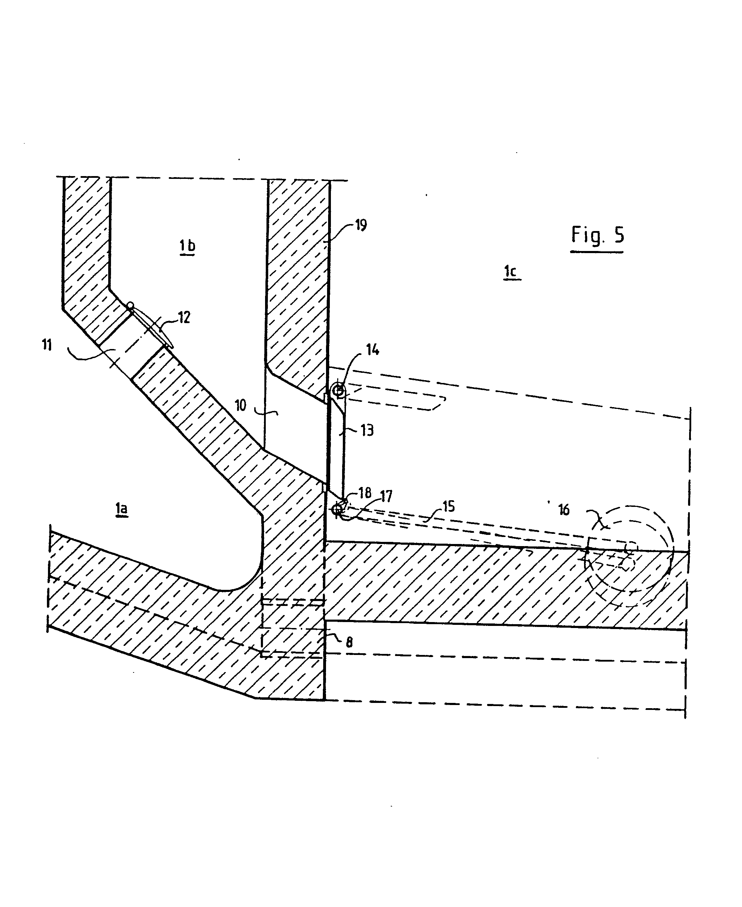

Die Fig. 1 zeigt ein rechteckiges Regenbecken 1 mit Zulauf 3 und Ablauf 4. Die Trennwand 19 unterteilt das Becken in eine Vorkammer 1a und eine Hauptkammer 1c. An dieser Trennwand 19 sind rechts und links je eine Spülkammer 1b' und 1b'' angeordnet. Die Spülkammern weisen zur Vorkammer 1a hin eine Wand 28 auf. In der Trennwand 19 ist im Bereich der Trockenwetterrinne eine Drosselöffnung 8 angeordnet. In der Wand 28 befindliche Zulauföffnungen 11a und 11b sind mit einer Rückschlagklappe 12 verschließbar (Fig. 2a und Fig. 5). Die Verschlußklappen 13 der Spülöffnung 10 der Spülkammern werden durch einen Schwimmer 16, der sich in der Hauptkammer 1c befindet, betätigt. Die Durchmesser von Ablauf 4 und Drosselöffnung 8 sind so aufeinander abgestimmt, daß durch die Drosselöffnung 8 ein größerer Volumenstrom durchgesetzt werden kann als durch den Ablauf 4. Bei stoßartigem Wasseranfall wird das Wasser in der Vorkammer 1a aufgestaut, gleichzeitig sammelt sich Wasser in der Hauptkammer 1c, was infolge der Hubbewegung des Schwimmers 16 zum Schließen der Versuchklappe 13 führt. Das in der Vorkammer 1a aufgestaute Wasser dringt durch die Zulauföffnungen 11a bzw. 11b in die Spülkammern 1b' und 1b'' ein. Sinkt der Flüssigkeitsspiegel nach dem Regenereignis, wird die Flüssigkeit durch die Rückschlagklappen 12 zurückgehalten, und die Spülkammern 1b' und 1b'' bleiben gefüllt. Ist die Hauptkammer 1c leergelaufen, dann ist der Schwimmer 16 so weit abgesunken, daß die Verschlußklappen 13 wieder freigegeben werden und gespült wird. Parallel zur Trockenwetterrinne 2 sind zwei Leitprofile 7a und 7b angeordnet, die den Spülschwall seitlich führen. Die Figur 2a zeigt einen Schnitt längs der Linie A-A der Fig. 1. Die Trennwand 19 und die Wand 28 sind als Überlaufschwelle ausgebildet.

Um aufschwimmende Schmutzstoffe am Eindringen in die Spülkammern 1b zu hindern, ist vor dieser Wand 28 eine Tauchwand 20 angeordnet, die sich von der Decke des Beckens in die Vorkammer 1a erstreckt. Die Leitprofile 7a, 7b weisen in der Nähe des Auslaufs 4 Auslauföffnungen auf, die durch Rückschlagklappen 23 verschließbar sind.

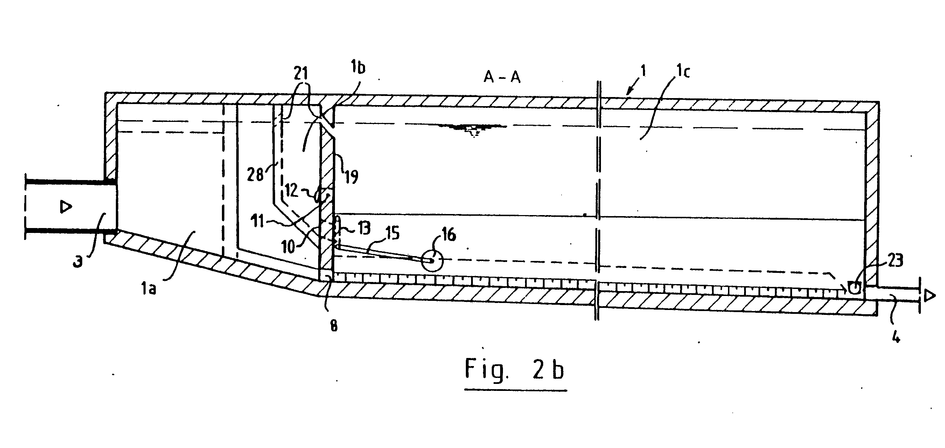

Die Fig. 2b zeigt eine andere Ausführungsform. Die Wand 28 erstreckt sich über das maximale Flüssigkeitsniveau hinaus bis zur Decke des Beckens 1 und weist zur den Spülkammern 1b hin aufsteigende Schrägschlitze 21 mit Tauchwandeffekt auf. Die Zulauföffnung 11 jeder Spülkammer 1b befindet sich bei dieser Ausführungsform oberhalb der Spülöffnung 10 in der Trennwand 19.

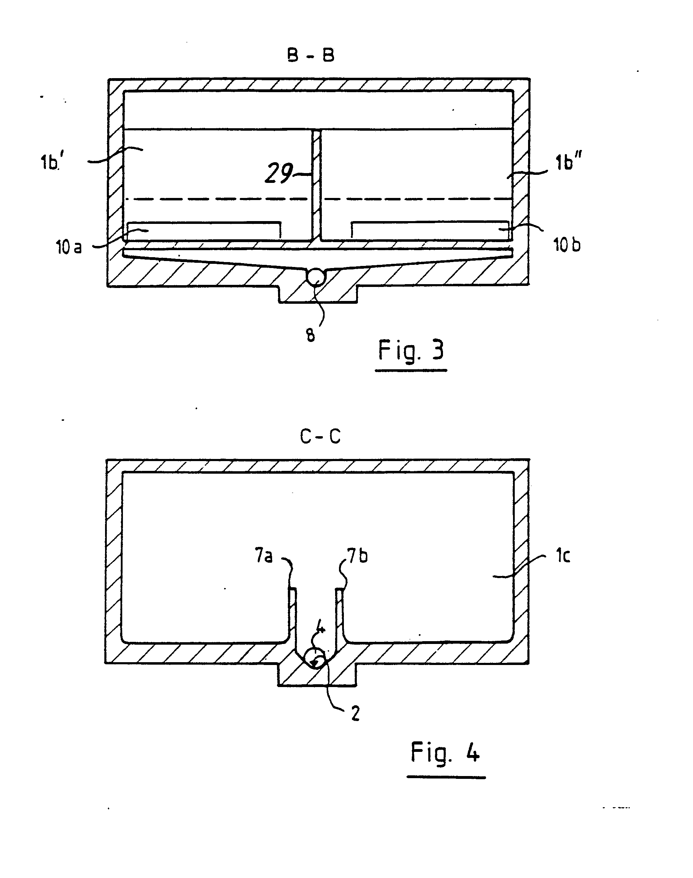

Fig. 3 zeigt einen Schnitt längs der Linie B-B in der Fig. 1. Entgegen der Darstellung der Fig. 1 erstrecken sich die beiden Spülkammern 1b' und 1b'' bis zur Mitte des Beckens und sind nur durch eine einzige Wand 29 voneinander getrennt.

In Fig. 5 ist der Verschließmechanismus der Spülöffnung 10 der Spülkammern 1b im Detail dargestellt. Die Verschlußklappe 13 ist um eine oberhalb dieser Spülöffnung 10 angeordnete Achse 14 drehbar gelagert. Der Verschließmechanismus besteht aus einer in der Hauptkammer 1c unterhalb der Spülöffnung 10 drehbar angeordneten Welle 17, an welcher einerseits eine einen Schwimmer 16 tragende Schwimmerstange 15 und andererseits Nocken 18 starr befestigt sind. Mit steigendem Flüssigkeitsniveau schwimmt der Schwimmer 16 auf, und die Nocken 18 drücken die Verschlußklappe 13 gegen die Spülöffnung 10. Die Nocken 18 und die Schwimmerstange 15 sind derart an der Welle 17 angeordnet, daß bei leergelaufenem Becken diese Nocken 18 die Verschlußklappe 13 freigeben. Durch den Druck des in der betreffenden Spülkammer 1b angesammelten Wassers wird die Verschlußklappe 13 nach oben geschwenkt (gestrichelte Darstellung). Direkt unter den jeweiligen Spülkammern 1b ist die Drosselöffnung 8 angeordnet.

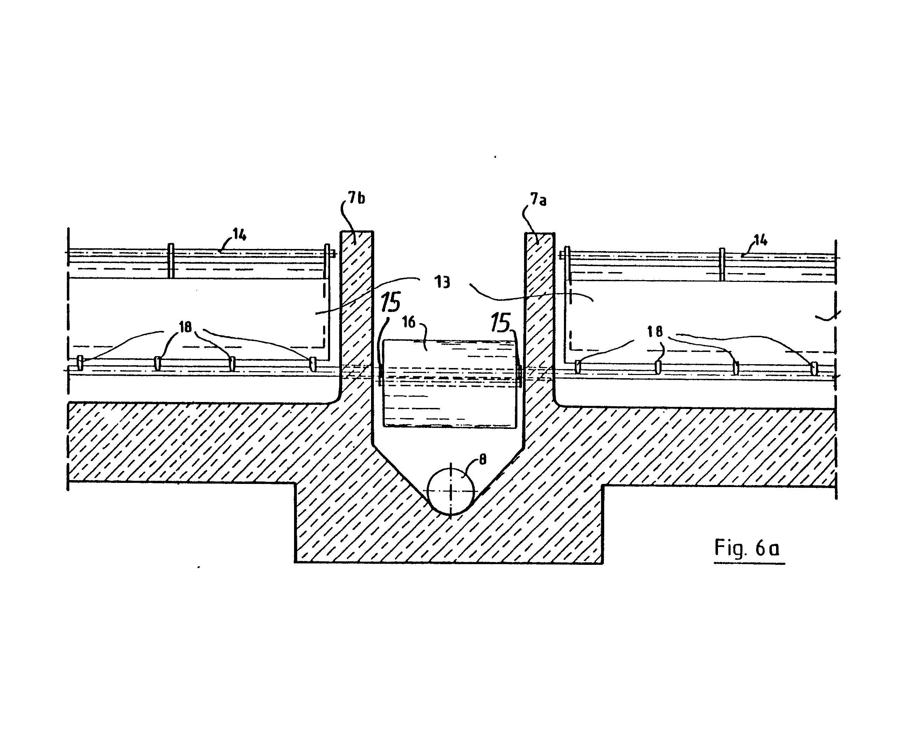

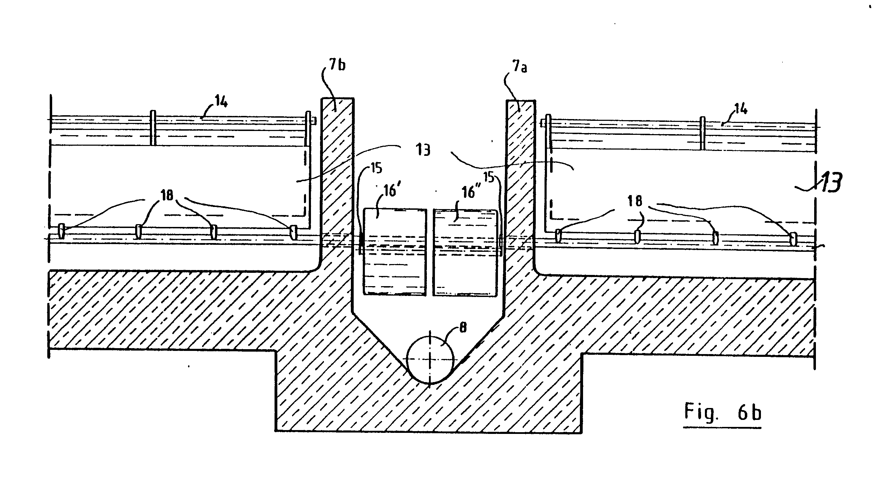

Die Figuren 6a und 6b zeigen in Ansicht die Verschließmechanismen der Spülöffnungen 10 der Spülkammer. In der Fig. 6a ist den beiden Verschließmechanismen ein gemeinsamer Schwimmer 16 zugeordnet, während in der Fig. 6b die beiden Verschließmechanismen durch je einen eigenen Schwimmer 16' und 16'' betätigt werden. Durch eine unterschiedliche Ausbildung der beiden Schwimmer 16' und 16'' oder durch eine geänderte Anordnung der Nocken 18 auf der Welle 17 wird erreicht, daß sich die beiden Spülkammern 1b' und 1b'' nacheinander entleeren.

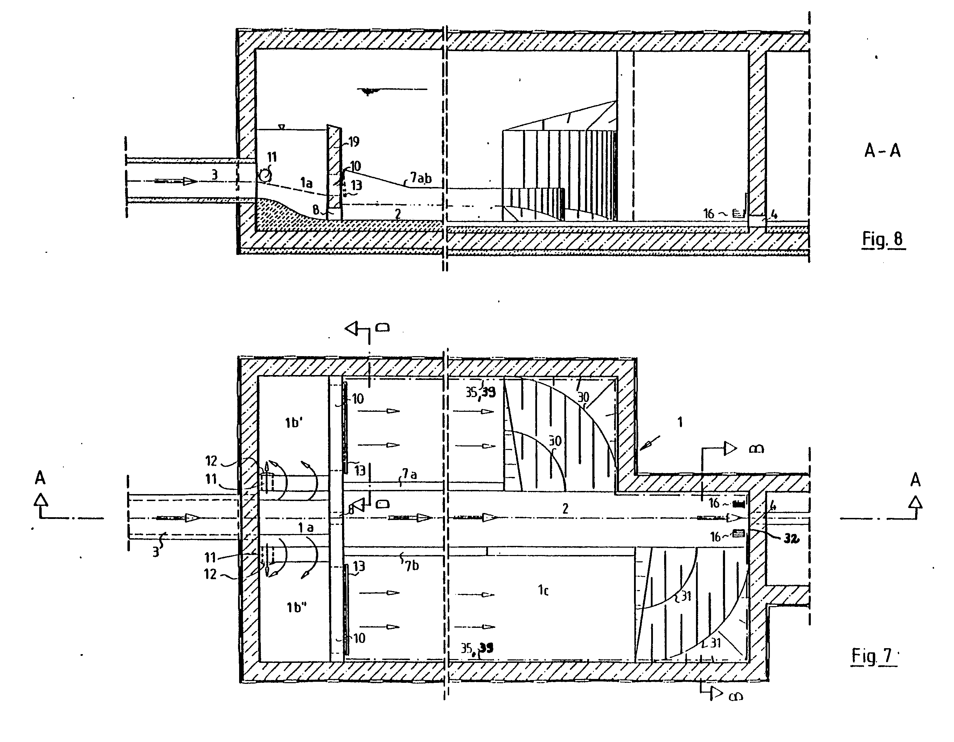

Die Fig. 7 und 8 zeigen Ansichten eines bezüglich der Trockenwetterrinne 2 unsymmetrisch aufgebauten Flüssigkeitsspeicherraumes. Die Länge des Flüssigkeitsspeicherraumes ist dabei auf der Seite der Spülkammer 1b' verkürzt gegenüber

der Länge auf der Seite der Spülkammer 1b″ ausgebildet. Die den Spülkammern 1b′ und 1b″ gegenüberliegenden Enden der Hauptkammer 1c weisen Rundungen 30 und 31 auf, durch die der Spülschwall in die Rinne 2 geleitet wird. Bei dieser Ausführungsform sind zwei Schwimmer 16 vorgesehen, die jedoch im Unterschied zu der zuvor beschriebenen Ausführungsform nicht im Bereich der Verschlußklappen 13 angeordnet sind, sondern auf der den Verschlußklappen 13 gegenüberliegenden Seite der Hauptkammer 1c, somit im Ablaufbereich der Hauptkammer.

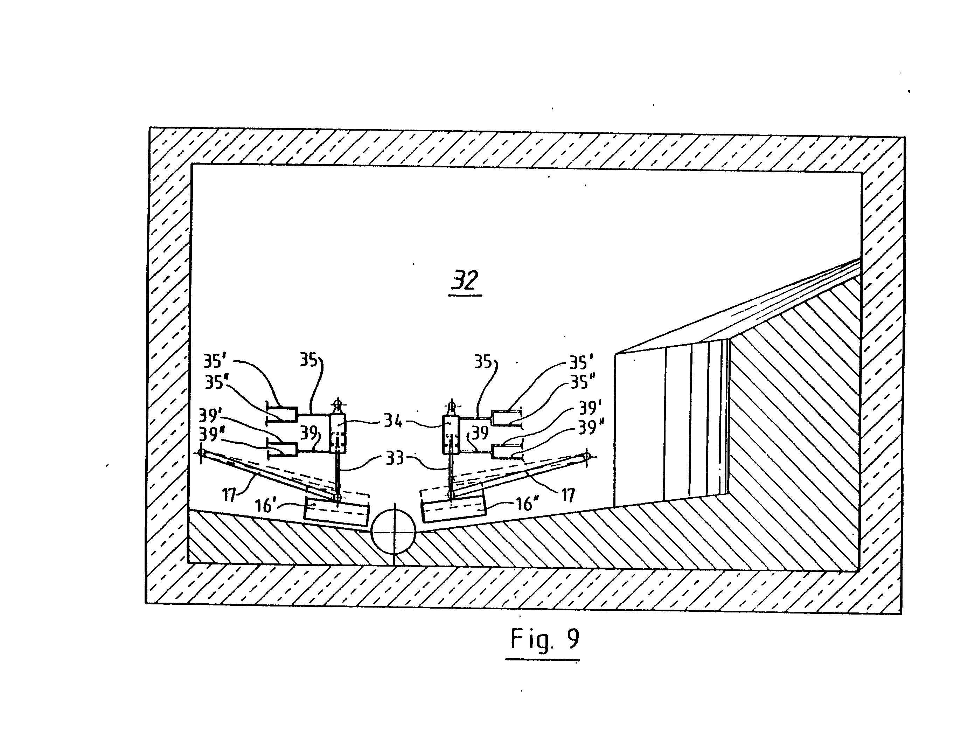

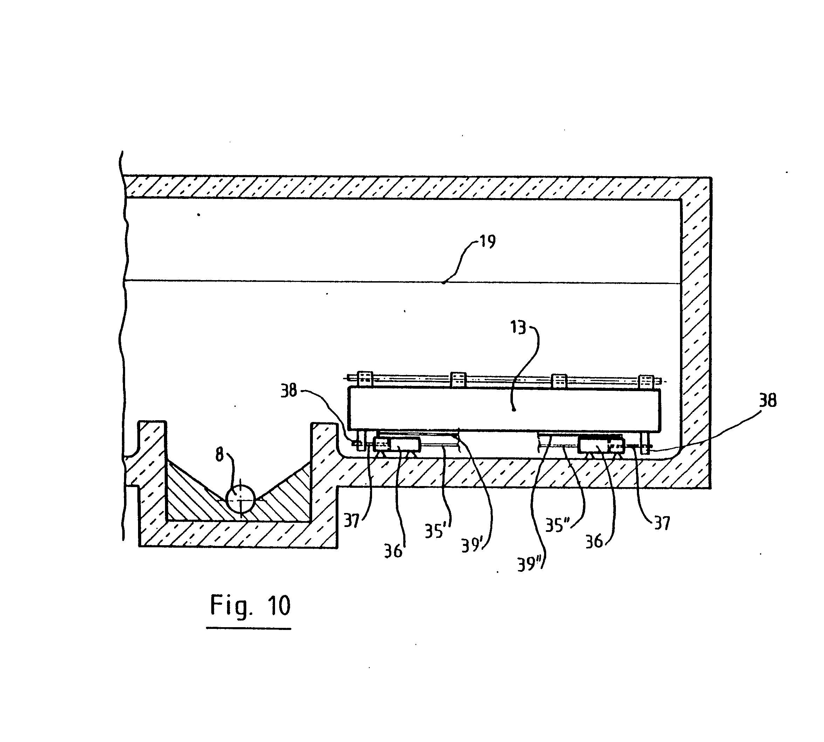

Die Figur 9 verdeutlicht die genaue Anordnung der Schwimmer 16′ und 16″ sowie mit diesen in Wirkverbindung stehenden Hydraulikzylindern 34. Jeder der Schwimmer 16′ bzw. 16″ ist mit seinem Schwimmerarm 17 und mit einem zugeordneten Hydraulikzylinder 34 an der Beckenwand 32 befestigt. Je nach Flüssigkeitsniveau wird durch den Schwimmer 16′ bzw. 16″ mit Schwimmerarm 17 Schub oder Zug auf die Kolbenstange 33 des betreffenden Hydraulikzylinders ausgeübt. Steigt das Flüssigkeitsniveau in der Hauptkammer, so wird der Schwimmer 16′ (und natürlich auch der Schwimmer 16″) nach oben bewegt, woraus eine Hubbewegung des Kolbens des Hydraulikzylinders 34 resultiert, und als Folge davon Hydraulikflüssigkeit durch die Leitung 35, die sich in die Leitungen 35′ und 35″ gabelt, zwei im Bereich einer Verschlußklappe 15 angeordneten Hydraulikzylindern 36 zugeführt wird. Wie der Darstellung der Figur 10 zu entnehmen ist, werden bei einer entsprechenden Zufuhr von Hydraulikflüssigkeit zu den Hydraulikzylindern 36 die Kolbenstangen 37 dieser Hydraulikzylinder ausgefahren und durchsetzen in der ausgefahrenen Stellung zwei an der Unterseite der Verschlußklappe 13 angeordnete Lochführungen 38. Die beiden Enden der Kolbenstange 37 sind zweckmäßig konisch ausgebildet, so daß sie beim Ausfahren der Kolbenstange 37 einfach in die Lochführungen 38 eingeführt werden können. Beim Absinken des Schwimmers 16′ (somit auch des Schwimmers 16″) wird die Kolbenstange 33 des Hydraulikzylinders 34 nach unten bewegt, wodurch die Hydraulikflüssigkeit nunmehr durch die Leitung 39 sowie die Zweigleitungen 39′ und 39″ den gegenüberliegenden Wirkflächen der Kolben des Hydraulikzylinders 36 zugeführt wird, was das Einfahren der Kolbenstange 37 bewirkt und beim Öffnen der Verschlußklappe 13 den Spülvorgang einleitet. Es versteht sich von selbst, daß die für den Schwimmer 16′ beschriebenen Vorgänge analog bei dem den Schwimmer 16″ betreffenden System ablaufen.

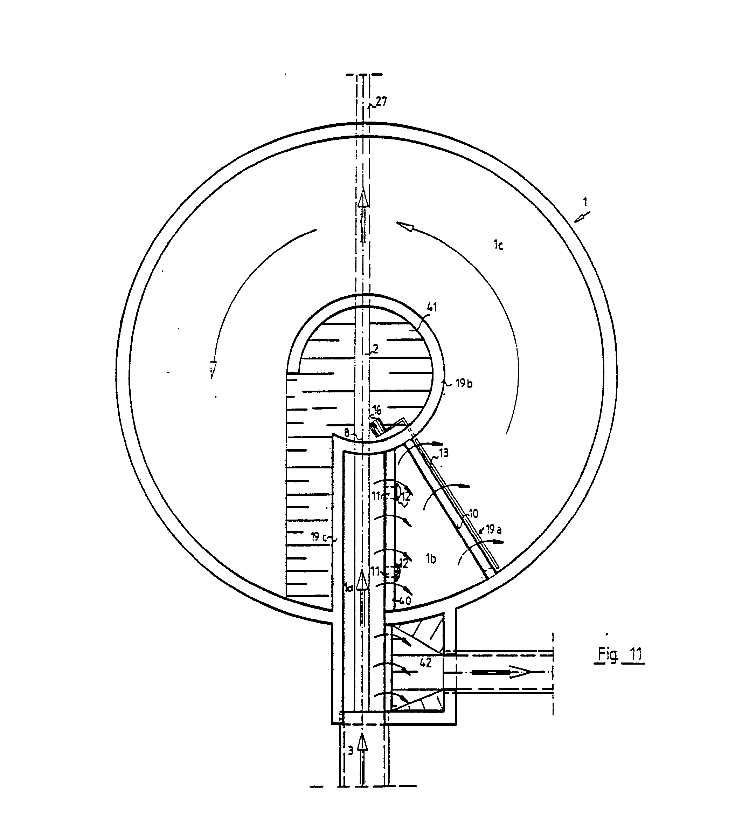

Die Fig. 11 zeigt eine Draufsicht auf ein kreisförmiges Becken, bei dem die Hauptkammer 1c einen außenliegenden Kreisringabschnitt bildet, der durch einen geraden Trennwandabschnitt 19a, einen kreisförmigen Trennwandabschnitt 19b und durch einen geraden Trennwandabschnitt 19c von der Vorkammer 1a getrennt ist. Die Vorkammer 1a erstreckt sich vom Zulauf 3 zur Mitte des Beckens und weist in der Draufsicht eine schlüssellochförmige Gestalt auf. Die Spülkammer 1b bildet in Draufsicht ebenfalls einen Kreisringabschnitt und ist zwischen dem Trennwandabschnitt 19a sowie dem Wandabschnitt 40 der Vorkammer 1a angeordnet. Die Vorkammer 1a ist mit dem inneren Ringraum 41 der Hauptkammer 1c durch die Drosselöffnung 8 verbunden, die Trockenwetterrinne 2 verläuft in Längsrichtung der Vorkammer 1a durch die Drosselöffnung 8 in den inneren Ringraum 41. Der Wandabschnitt 40 weist Rückschlagklappen 12 auf, der Trennwandabschnitt 19a ist mit einer Verschlußklappe 13 versehen. Der Schwimmer 16, der den Verschließmechanismus der Spülöffnung 10 der Spülkammer 1d betätigt, befindet sich im inneren Ringraum 41. Bei einem Regenereignis strömt Flüssigkeit in die Vorkammer 1a und durch die Drosselöffnung 8 in den inneren Ringraum 41. Die Hubbewegung des Schwimmers 16 führt zum Schließen der Verschlußklappe 13, gleichzeitig tritt Flüssigkeit durch die Zulauföffnungen 11 in die Spülkammer 1b. Bei weiterem Flüssigkeitszulauf wird die Spülkammer 1b durch die Zulauföffnungen 11 sowie die Hauptkammer 1c durch die Drosselöffnung 8 gefüllt, bei erhöhtem Flüssigkeitsanfall tritt diese von der Vorkammer 1a über den Wandabschnitt 40 in die Spülkammer 1b und von dort über den Trennwandabschnitt 19a in die Hauptkammer 1c bzw. sie verläßt das Regenbecken 1 bereits über einen in der Vorkammer 1a angeordneten Überlauf 42. Die Flüssigkeit verläßt das Regenbecken über das Ablaufrohr 27.

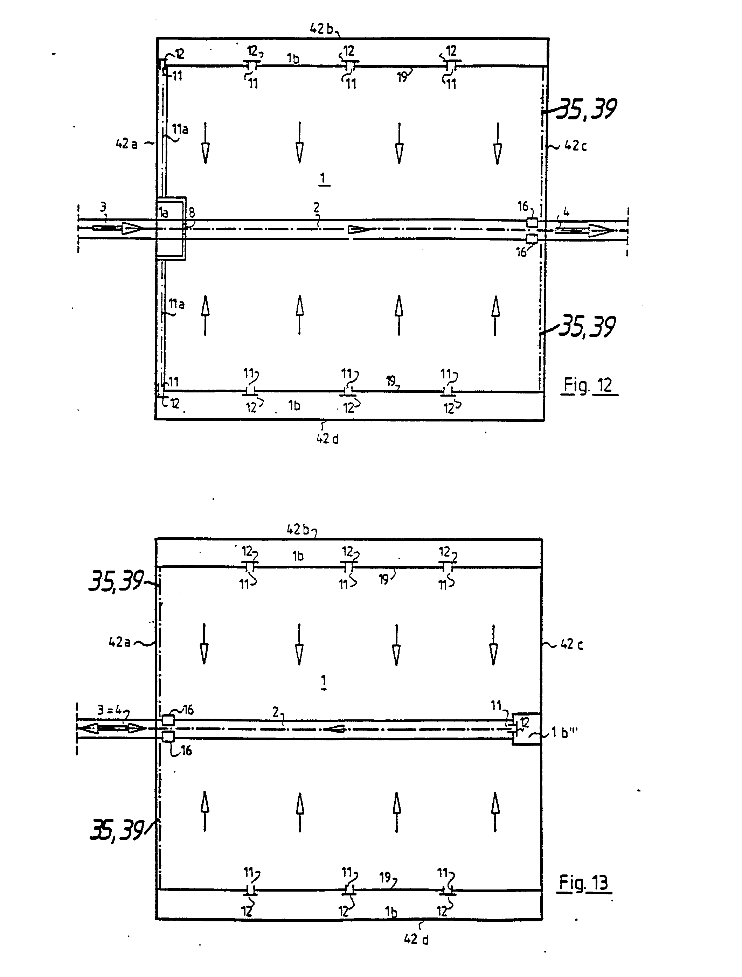

Die Fig. 12 zeigt einen rechteckigen Flüssigkeitsspeicherraum 1 mit den Wänden 42a, 42b, 42c und 42d, bei dem der Zulauf 3 und der Auslauf 4 an den gegenüberliegenden Wänden 42a, 42c angeordnet sind. Die Sohlhochpunkte verlaufen längs der Seitenwände 42b, 42d, an denen die Spülkammern 1b angeordnet sind. Die Ablaufrinne oder Trockenwetterrinne 2 verläuft in Beckenmitte. Die Spülkammern 1b werden durch die Zulauföffnungen 11 mit Sammelflüssigkeit gefüllt. Die Zulauföffnungen 11 sind teilweise durch Rohre 11a oder dgl. mit der mit einer Drossel 8 ausgestatteten Vorkammer 1a verbunden. In besonderen Anwendungsfällen kann auf die Zulauföffnungen 11 verzichtet werden; in diesem Fall wird die Wand 19 als Überlaufschwelle ausgebildet, und die Flüssigkeit dringt bei gefülltem Becken 1 von oben in die Spülkammer 1b ein. Es ist auch möglich, die Zulauföffnungen 11 mit der Wand 19 als Überlaufschwelle zu kombinieren.

Die Spülöffnungen (nicht dargestellt) der Spülkammern 1b werden mittels einer in sich geschlossenen Hydraulik 35, 39 von Schwimmern 16 betätigt. Hydraulik und Schwimmeranordnung sind so ausgelegt, daß nach der Entleerung die Verschlußklappen der Spülkammern 1b nacheinander geöffnet werden. Dadurch wird erreicht, daß die Ablaufrinne 2 nicht durch die beiden Spülschwalle überlastet wird.

Die Fig. 13 zeigt eine andere Ausführungsform eines rechteckigen Beckens 1. Hier verlaufen die Sohlehochpunkte ebenfalls längs der Seitenwände 42b, 42d, nur ist jetzt der Zulauf 3 mit dem Ablauf 4 identisch. Zur separaten Spülung dieser Ablaufrinne kann eine weitere Spülkammer 16b' vorgesehen sein, die vorzugsweise am Rinnenhochpunkt angeordnet ist und gleichfalls vom Schwimmer 16 gesteuert ist. Sie kann auch alleine nur zur Spülung der Rinne 2 angeordnet sein. Es ist auch möglich, zusätzlich an der Stirnwand 42c weitere Spülschwallspeicherkammern 1b anzuordnen.

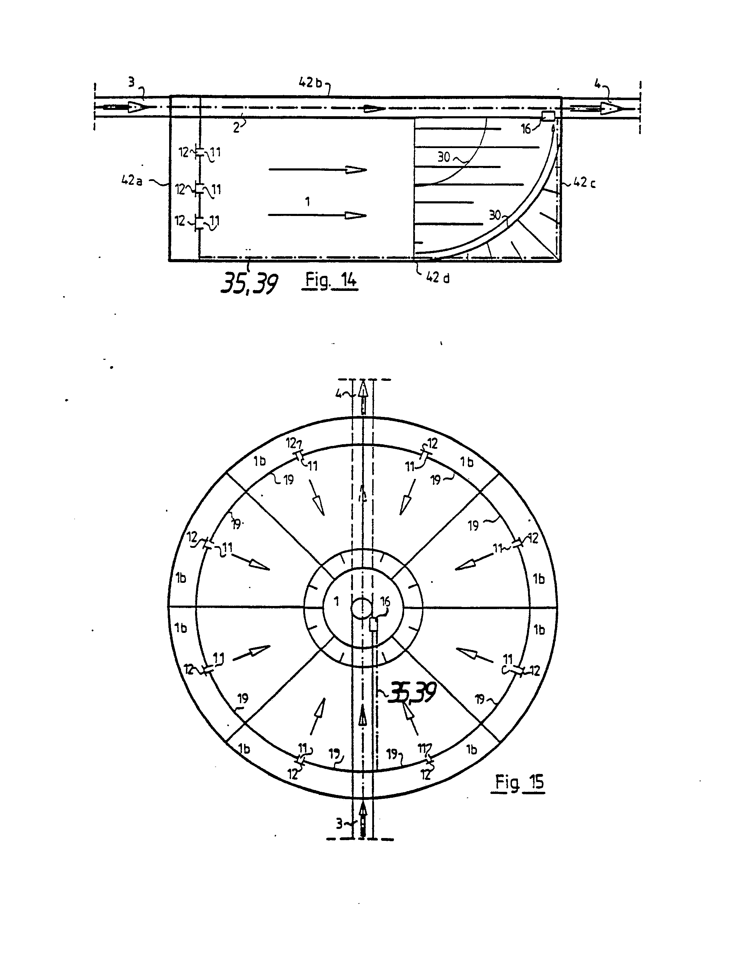

Die Fig. 14 zeigt eine Ausführungsform eines rechteckigen Beckens, bei dem die Sohlhochpunkte längs der Wand 42a verlaufen. Die an dieser Seitenwand angeordnete Spülkammer 1b bewirkt eine Spülung in Richtung auf die Wand 42c. Durch eine Rundung 30 wird der Spülschwall direkt in die Rinne 2 geleitet, aus der die Schmutzstoffe durch den ständigen Durchfluß selbsttätig ausgetragen werden.

Bei dem in Fig. 15 beispielhaft gezeigten kreisförmigen Becken 1 verlaufen die Sohlhochpunkte am Umfang des Beckens. Mit den dort angeordneten Spülkammern 1b wird eine radiale Spülwirkung erzielt.

## Patentansprüche

1. Flüssigkeitsspeicherraum (1), insbesondere Regenbecken- oder Kanalstauraum, mit mindestens einer im Bereich eines Sohlhochpunktes des Speicherraumes angeordneten, mit Speicherflüssigkeit füllbaren Spülkammer (1b), die bei leergelaufenem Speicherraum über mindestens eine Spülöffnung (10) die Speicherflüssigkeit als Spülschwall auslaufen läßt,
dadurch gekennzeichnet, daß die Spülkammer (1b) sich mit steigendem Speicherflüssigkeitsniveau von selbst mit Speicherflüssigkeit füllt, Mittel (12) vorgesehen sind, die die zugelaufene Speicherflüssigkeit in der Spülkammer (1b) zurückhalten und die Spülöffnung (10) durch einen vom Speicherflüssigkeitsniveau des Speicherraumes (1) gesteuerten Verschluß (13) verschlossen und freigegeben wird.

2. Speicherraum nach Anspruch 1, gekennzeichnet durch mindestens eine im Bereich des Zulaufs (3) des Speicherraumes (1) zwischen dem Zulauf (3) und dem Speicherraum (1) angeordnete Drossel (8).

3. Speicherraum nach Anspruch 1 oder 2, dadurch gekennzeichnet, daß die Mittel (12) eine Zulauföffnung (11) verschließen, die mit einer Vorkammer (1a) oder mit dem Speicherraum (1) in Verbindung stehen, wobei die Mittel (12) als die Zulauföffnung (11) verschließbare Rückschlagklappe (12) ausgebildet sind.

4. Speicherraum nach einem der Ansprüche 1 bis 3, dadurch gekennzeichnet, daß die Spülöffnung (10) der Spülkammer (1b) durch einen Mechanismus verschließbar ist, der durch einen im Speicherraum (1) angeordneten Schwimmer (16), insbesondere einen im Ablaufbereich des Speicherraumes (1) angeordneten Schwimmer (16) entsprechend dem Flüssigkeitsstand im Speicherraum, insbesondere dem Flüssigkeitsstand im Ablaufbereich des Speicherraumes (1) betätigt wird.

5. Speicherraum nach einem der Ansprüche 1 bis 4, dadurch gekennzeichnet, daß die Wand (28) zwischen der Vorkammer (1a) und der Spülkammer (1b) und/oder die Wand (19) zwischen der Spülkammer (1b) und dem Speicherraum (1) eine Überlaufschwelle bilden.

6. Speicherraum nach einem der Ansprüche 1 bis 5, dadurch gekennzeichnet, daß mehrere Spülkammern (1b) direkt oder in Abständen nebeneinander und/oder übereinander und/oder hintereinander angeordnet sind.

7. Speicherraum nach einem der Ansprüche 1 bis 6, dadurch gekennzeichnet, daß die Spülkammer (n) (1b) außerhalb des Speicherraumes (1) angeordnet ist (sind).

8. Speicherraum nach einem der Ansprüche 1 bis 7, dadurch gekennzeichnet, daß die Schließmechanismen für die Spülöffnungen (10) derart beschaffen sind, daß sich die Spülkammern (1b) nacheinander entleeren.

9. Speicherraum nach einem der Ansprüche 1 bis 8, dadurch gekennzeichnet, daß der Speicherraum (1) eine in Auslaufrichtung der Speicherflüssigkeit verlaufende Ablaufrinne (2) aufweist, wobei parallel zu dieser an deren Rand Leitprofile (7a, 7b) angeordnet sind, die den Spülschwall seitlich führen.

10. Speicherraum nach einem der Ansprüche 1 bis 9, dadurch gekennzeichnet, daß bei Speicherräumen (1) mit Ablaufrinnen (2) mindestens eine Spülkammer (1b) am Rinnenhochpunkt vorgesehen ist, die in die Ablaufrinne (2) entleert.

11. Speicherraum nach einem der Ansprüche 1 bis 10, dadurch gekennzeichnet, daß bei Speicherräumen (1) mit Sohlenquergefälle zusätzliche Leitprofile in Beckenlängsrichtung zur Führung des Spülschwalls angeordnet sind.

12. Speicherraum nach einem der Ansprüche 1 bis 11, dadurch gekennzeichnet, daß im Ablaufbereich des Speicherraumes (1) mindestens eine Rundung (30, 31) vorgesehen ist, die den Spülschwall in die Ablaufrinne (2) leitet.

13. Speicherraum nach Anspruch 12, dadurch gekennzeichnet, daß Rundungen (30, 31) im Ablaufbereich gegenüber und versetzt angeordnet sind.

14. Speicherraum nach einem der Ansprüche 1 bis 13, dadurch gekennzeichnet, daß die Grundfläche des Speicherraumes (1) rechteckig, kreisförmig oder polygonal ist.

## Claims

1. Liquid storage space (1), especially a rainwater or stormwater run-off reservoir, having at least one scavenging chamber (1b) disposed in the region of a high point of the floor of the storage space and which can be filled with storage liquid, and which whenever the storage space has run dry allows the storage liquid to be discharged as a scavenging wave via at least one scavenging opening (10),

characterised in that the scavenging chamber (1b) automatically fills with storage liquid as the level of the storage liquid rises, means (12) are provided which hold back the storage liquid that has collected in the scavenging chamber (1b), and the scavenging opening (10) is obturated and opened by a locking mechanism (13) controlled by the level of the storage liquid in the storage space (1).

2. Storage space according to claim 1, characterised by having at least one flow restrictor (8) disposed in the region of the inlet (3) of the storage space (1), between the inlet (3) and the storage space (1).

3. Storage space according to claim 1 or 2, characterised in that the means (12) obturate an inlet opening (11) communicating with an antechamber (1a) or with the storage space (1), the means (12) being designed as a non-return valve (12) capable of obturating the inlet opening (11).

4. Storage space according to one of claims 1 to 3, characterised in that the scavenging opening (10) of the scavenging chamber (1b) can be obturated by a mechanism actuated by a float (16) disposed in the storage space (1), especially a float (16) disposed in the run-off area of the storage space (1), according to the depth of liquid in the storage space (1) and especially to the depth of liquid in the run-off area of the storage space (1).

5. Storage space according to one of claims 1 to 4, characterised in that the wall (28) between the antechamber (1a) and the scavenging chamber (1b) and/or the wall (19) between the scavenging chamber (1b) and the storage space (1) form an overflow sill.

6. Storage space according to one of claims 1 to 5, characterised in that a plurality of scavenging chambers (1b) are disposed directly or at a distance next to one another and/or one above the other and/or one behind the other.

7. Storage space according to one of claims 1 to 6, characterised in that the scavenging chamber or chambers (1b) is (are) disposed outside the storage space (1).

8. Storage space according to one of claims 1 to 7, characterised in that the closure mechanisms for the scavenging openings (10) are so constructed that the scavenging chambers (1b) empty in succession.

9. Storage space according to one of claims 1 to 8, characterised in that the storage space (1) has a run-off channel (2) extending in the direction of run-off of the storage liquid, and guides (7a, 7b) are disposed parallel to said run-off channel at the edge thereof to laterally guide the scavenging wave.

10. Storage space according to one of claims 1 to 9, characterised in that in the case of storage spaces (1) with run-off channels (2) at least one scavenging chamber (1b) is provided at the high point of the channel which empties into the run-off channel (2).

11. Storage space according to one of claims 1 to 10, characterised in that in the case of storage spaces (1) with a transversal slope down to the floor, additional guides are disposed lengthways along the basin to guide the scavenging wave.

12. Storage space according to one of claims 1 to 11, characterised in that in the run-off area of the storage space (1) at least one curved element (30, 31) is provided which guides the scavenging wave into the run-off channel (2).

13. Storage space according to claim 12, characterised in that curved elements (30, 31) are disposed in the run-off area in an opposed and staggered arrangement.

14. Storage space according to one of claims 1 to 13, characterised in that the base of the storage space (1) is rectangular, circular or polygonal.

## Revendications

1. Espace de retenue de liquide (1), en particulier bassin à pluies ou bien espace de retenue de canal, avec au moins une chambre de rinçage (1b) pouvant être remplie d'un liquide à retenir, qui est disposée dans la zone d'un point haut du fond de la chambre de rinçage et qui laisse s'écouler le liquide à retenir par au moins un orifice de rinçage (10), lorsque l'espace de retenue est vidé, en un flot de rinçage, caractérisé en ce que la chambre de rinçage (1b) se remplit d'elle-même de liquide à retenir, lorsque le niveau du liquide à retenir s'élève, que des moyens (12) sont prévus, qui contiennent dans la chambre de rinçage (1b) le liquide à retenir qui y est arrivé et que l'orifice de rinçage (10) est obturé et ouvert par un obturateur (13), commandé par le niveau atteint par le liquide à retenir dans l'espace de retenue.

2. Espace de retenue de liquide selon la revendication 1, caractérisé par au moins un étranglement (8) disposé entre l'amenée (3) et l'espace de retenue (1), dans la zone d'amenée (3) de l'espace de retenue (1).

3. Espace de retenue de liquide selon la revendication 1 ou 2, caractérisé en ce que les moyens (12) obturent un orifice d'amenée (11), relié à une préchambre (1a) ou bien à l'espace de retenue (1), les moyens (12) étant conçus à cette occasion en clapet anti-retour (12) pouvant obturer l'orifice d'amenée (11).

4. Espace de retenue de liquide selon l'une quelconque des revendications 1 à 3, caractérisé en ce que l'orifice de rinçage (10) de la chambre de rinçage (1b) est obturable par un mécanisme qui est actionné par un flotteur (16), disposé dans l'espace de retenue (1), en particulier un flotteur (16) disposé dans la zone d'écoulement de l'espace de retenue (1), en fonction du niveau de liquide existant dans l'espace de retenue, en particulier en fonction du niveau de liquide existant dans l'espace de retenue (1).

5. Espace de retenue de liquide selon l'une quelconque des revendications 1 à 4, caractérisé en ce que la paroi (28) située entre la préchambre (1a) et la chambre de rinçage (1b) et/ou la paroi (19) située entre la chambre de rinçage (1b) et l'espace de retenue (1) forment un seuil de trop plein.

6. Espace de retenue de liquide selon l'une quelconque des revendications 1 à 5, caractérisé ce que plusieurs chambres de rinçage (1b) sont disposées directement les unes à côté des autres, ou bien à intervalles et/ou les unes sur les autres et/ou les unes derrière les autres.

7. Espace de retenue de liquide selon l'une quelconque des revendications 1 à 6, caractérisé en ce que la chambre de rinçage (n) (1b) est (sont) située(s) à l'extérieur de l'espace de retenue (1).

8. Espace de retenue de liquide selon l'une quelconque des revendications 1 à 7, caractérisé en ce que les mécanismes de fermeture des orifices de rinçage (10) sont constitués de telle sorte qu'ils vident les chambres de rinçage (1b) les unes après les autres.

9. Espace de retenue de liquide selon l'une quelconque des revendications 1 à 8, caractérisé en ce que l'espace de retenue (1) possède une gouttière d'écoulement (2) qui se développe dans la direction d'écoulement du liquide à retenir, des profils conducteurs (7a, 7b) étant à cette occasion disposé parallèlement à celle-ci et sur son bord, en guidant latéralement le flot de rinçage.

10. Espace de retenue de liquide selon l'une quelconque des revendications 1 à 9, caractérisé en ce qu'au moins une chambre de rinçage (1b) est prévue sur le point haut de la gouttière, dans les espaces de retenue (1) possédant des gouttières d'écoulement (2), pour vider la gouttière d'écoulement (2).

11. Espace de retenue de liquide selon l'une quelconque des revendications 1 à 10, caractérisé en ce que des profils conducteurs supplémentaires sont disposés dans la direction longitudinale du bassin, pour guider le flot de rinçage, dans les espaces de retenue (1) possédant une pente transversale par rapport au fond.

12. Espace de retenue de liquide selon l'une quelconque des revendications 1 à 11, caractérisé en ce qu'au moins un arrondi (30, 31) est prévu dans la zone d'écoulement de l'espace de retenue (1), pour guider le flot de rinçage dans la gouttière d'écoulement (2).

13. Espace de retenue de liquide selon la revendication 12, caractérisé en ce que les arrondis (30, 31) sont disposés dans la zone d'écoulement, de manière opposée et décalée.

14. Espace de retenue de liquide selon l'une quelconque des revendications de 1 à 13, caractérisé en ce que la surface de base de l'espace de retenue (1) est rectangulaire, circulaire ou bien polygonale.

Fig. 1

0 211 058

Fig. 2a

Fig. 2 b

0 211 058

B - B

## Fig. 3

C - C

## Fig. 4

Fig. 5

Fig. 6a

Fig. 6b

A-A

Fig. 8

Fig. 7

0 211 058

Fig. 9

Fig. 10

0 211 058

Fig. 11

Fig. 12

Fig. 13

35,39  Fig. 14

Fig. 15